# EUROPÄISCHE PATENTSCHRIFT

(11) **EP 1 332 063 B1**
(45) Veröffentlichungstag und Bekanntmachung des Hinweises auf die Patenterteilung: **22.03.2006**
(21) Anmeldenummer: 01992654.2
(22) Anmeldetag: 05.10.2001
(51) Int. Cl.: B60K 15/03

(54) **DOPPELWANDIGER KRAFTSTOFFBEHÄLTER AUS KUNSTSTOFF**
DOUBLE-WALLED FUEL TANK MADE OF SYNTHETIC MATERIAL
RESERVOIR DE CARBURANT EN PLASTIQUE A DOUBLE PAROI

(30) Priorität: 06.11.2000 DE 10054876
(43) Veröffentlichungstag der Anmeldung: 06.08.2003
(73) Patentinhaber: Kautex Maschinenbau GmbH, 53229 Bonn (DE)
(72) Erfinder: BALZER, Martin, 53757 Sankt Augustin (DE); HESS, Dieter, 53913 Swistal (DE); DAUBENBÜCHEL, Werner, 51491 Overath (DE); PAPPERT, Michael, 53783 Eitorf (DE); STEHR, Roger, 40599 Düsseldorf (DE); KLÜSENER, Peter, 53179 Bonn (DE)
(74) Vertreter: Kierdorf, Theodor
(86) Internationale Anmeldenummer: PCT/DE2001/003822
(87) Internationale Veröffentlichungsnummer: WO 2002/036380

(56) Entgegenhaltungen:
- DE-A- 19 814 314
- DE-A- 19 853 097
- US-A- 5 567 296

## Beschreibung

Die Erfindung betrifft einen doppelwandigen Kraftstoffbehälter aus Kunststoff, der aus wenigstens zwei miteinander stoffschlüssig verbundenen, schalenförmigen Elementen zusammengesetzt ist.

Einschichtige Kraftstoffbehälter aus Polyethylen sind bekanntermaßen für Kohlenwasserstoffe mehr oder weniger permeabel mit der Folge, dass Kohlenwasserstoffe durch die Tankwandung diffundieren und an die Umwelt abgegeben werden, was nicht wünschenswert ist. An Kraftstofftanks sind erhöhte Anforderungen an deren Durchlässigkeit für Kohlenwasserstoffe zu stellen.

Um die Kohlenwasserstoffemission von Kraftstofftank-Systemen zu reduzieren, sind zahlreiche Anstrengungen unternommen worden. Aus diesem Grunde ist es bekannt, Kraftstofftanks im Ko-Extrusions-Blasverfahren herzustellen, wobei deren Wandung aus einem Laminat mit einer oder mehreren für Kohlenwasserstoffe schwer permeablen Barriereschichten besteht. Solche Tanks genügen im allgemeinen den Anforderungen in bezug auf maximal zulässige Kohlenwasserstoffemissionen.

In dieser Hinsicht problematisch sind jedoch nach wie vor Anschlussöffnungen im Tank, die einen Dichtsitz für Stutzen, Ventile und dergleichen bilden, auch Schweißnähte sowohl bei Kraftstoffbehältern, die aus mehreren im Spritzgussverfahren gefertigten Teilen zusammengesetzt sind, als auch bei Kraftstoffbehältern, die durch Extrusionsblasformen erhalten wurden, stellen eine mögliche Emissionsquelle dar.

Zur Verringerung der Permeationsrate eines Kraftstoffbehälters wird beispielsweise in der DE 36 00 177 A1 vorgeschlagen, den Kraftstoffbehälter doppelwandig aus einem Innenbehälter und einer äußeren Hülle aufzubauen, die zusammen einen dichten Zwischenraum bilden, in den eine Entgasungs- oder Entlüftungsleitung einmündet. Bei einer solchen Anordnung können zwar ein Großteil der Kohlenwasserstoffe, die unmittelbar durch die Tankwandung diffundieren, in einem Filterelement aufgefangen werden, jedoch ist es hier erforderlich, die äußere Hülle mehrfach mit Leitungen zu durchsetzen, die ebenfalls Emissionsquellen darstellen. Solche außerhalb des Behälters angeordneten Leitungen und Leitungsanschlüsse müssen bezüglich ihrer Emissionen optimiert werden, was sehr aufwendig ist und mittlerweile ebenfalls an Grenzen stößt.

Es gibt daher das Bestreben, möglichst viele Leitungen und Anschlussstellen in den Tank zu verlegen. Hierzu ist beispielsweise aus der DE 198 49 820 A1 bekannt, im Bereich des Tanks außenseitig wenigstens eine Abdeckung gasdicht anzubringen, die mit der Tankwandung einen gegenüber der Umgebung abgeschirmten Raum begrenzt, innerhalb dessen Anschlüsse, Verbindungsleitungen und dergleichen angeordnet sind. Diese Abdeckung ist gasdicht mit der Tankwandung verschweißt. Unterhalb dieser kann beispielsweise auch ein Aktivkohlefilter zur Aufnahme und zur Absonderung freier Kohlenwasserstoffe vorgesehen sein.

Eine ähnliche Lösung ist beispielsweise aus der WO 00/48859 bekannt, wo der Tank ebenfalls mit einer großflächigen Abdeckung in Form einer Haube gasdicht verschweißt wird.

Es gibt allerdings zunehmend Bemühungen, Anschlussstellen und Leitungen möglichst ganz in das Tankinnere zu verlegen. Dies ist besonders gut in Kraftstoffbehältern zu realisieren, die aus großen Teilen, beispielsweise aus zwei Halbschalen zusammengesetzt sind.

Aus der DE 198 53 097 ist beispielsweise ein solcher Kraftstoffbehälter bekannt, der eine im Spritzgussverfahren aus Kunststoff hergestellte Wandung aufweist, die zweiteilig ausgebildet ist, wobei jede Hälfte des Tanks wiederum jeweils aus übereinander angeordneten Schalen besteht, zwischen denen ein Schlitz oder Spalt freigehalten ist, wobei in diesen eintretende Kraftstoffdämpfe abgeführt und gefiltert werden. Bei einem solchen Tank können alle Einbauteile unter günstigen Einbauverhältnissen montiert werden, bevor die beiden Halbschalen miteinander verschweißt werden. Bei der Herstellung solcher Tanks besteht allerdings das Problem, dass die Permeationseigenschaften des verwendeten Kunststoffs beispielsweise durch Mehrlagigkeit desselben kaum verbessert werden können. Die Herstellung mehrschichtiger Halbschalen ist im Spritzgießverfahren nicht möglich. Das Thermoformen von Halbschalen aus mehrschichtigem Halbzeug bereitet bei der Herstellung regelmäßig Schwierigkeiten, da die Verarbeitungstemperatur der einzelnen Komponenten der üblicherweise verwendeten Laminate verhältnismäßig weit auseinanderliegen.

Der Erfindung liegt daher die Aufgabe zugrunde, einen Kraftstoffbehälter der eingangs genannten Art, wie er beispielsweise aus der DE 198 53 097 A1 bekannt ist, so weiterzubilden, dass dieser besonders kostengünstig herstellbar ist und dass möglichst wenig Kraftstoffdämpfe durch dessen Wandung in die Umwelt gelangen können.

Die Erfindung wird dadurch gelöst, dass die schalenförmigen Elemente jeweils als doppelwandige Blasformteile ausgebildet sind, die jeweils zumindest bereichsweise mehrschichtig koextrudiert sind und zwischen deren Wandungen jeweils zumindest bereichsweise ein Spalt freigehalten ist.

Ein so hergestellter Kraftstoffbehälter hat gegenüber den bisher bekannten Kraftstoffbehältern diverse Vorzüge, die vor allen Dingen darauf zurückzuführen sind, dass die einzelnen Elemente des Kraftstoffbehälters mehrschichtig koextrudiert sind, was einerseits die Möglichkeit eröffnet, die Permeabilität des verwendeten Kunststoffs mit den bekannten Maßnahmen zu verringern, andererseits werden die Vorzüge mehrteiliger Behälter hinsichtlich der Unterbringung von Leitungen und Anschlusselementen genutzt. Alle sichtbaren Oberflächen der Bauteile haben eine hervorragende Oberflächenbeschaffenheit, was bei den Innenflächen herkömmlich blasgeformter Kraftstofftanks üblicherweise sonst nicht der Fall ist. Dort hinterlässt der Kunststoff sonst größere Fließmarkierungen, aufgrund der Tatsache, dass im Inneren eines blasgeformten Teils kein Werkzeugkontakt stattfindet. Auch ergeben sich bei herkömmlich blasgeformten Kraftstofftanks Unregelmäßigkeiten in deren Wandstärke auf Grund unterschiedlicher Ausdehnungswege des Vorformlings. Der erfindungsgemäß ausgebildete Kraftstoffbehälter hat demgegenüber den Vorzug, dass die Innenkontur eine definierte, glatte Oberfläche aufweist.

Die schalenförmigen Elemente können jeweils so ausgebildet sein, dass sie eine beliebige, auch unsymmetrisch verlaufende Teilung des zusammengefügten Kraftstoffbehälters bilden. Beispielsweise kann ein schalenförmiges Element als trog- oder wannenförmiges Element ausgebildet sein, wohingegen das mit diesem zusammenzufügende Element einen Deckel bildet.

Zweckmäßigerweise jedoch sind die doppelwandigen Elemente jeweils als Halbschalen ausgebildet, die miteinander verschweißt sind.

Die Wandungen der den Behälter bildenden Elemente können jeweils zumindest bereichsweise aus einem Laminat mit wenigstens einer Barriereschicht für Kohlenwasserstoffe ausgebildet sein. Solche Barriereschichten können beispielsweise aus EVOH (Ethylen-Vinyl-Alkohol) ausgebildet sein. Aufgrund der doppelwandigen Ausbildung der den Kraftstoffbehälter bildenden Elemente ist es möglich, anstelle von EVOH preiswertere Barriere-Materialien zu verwenden, wodurch die Herstellungskosten des Kraftstoffbehälters reduziert werden. Es kann aber auch vorgesehen sein, in jeweils nur einer der beiden Wandungen der blasgeformten Elemente eine Barriereschicht vorzusehen. Dies wäre bei der Herstellung einfach dadurch zu bewerkstelligen, dass der Vorformling nur mit einer sich über die Hälfte dessen Umfangs erstreckenden Barriereschicht extrudiert wird.

Bei einer bevorzugten und auch zweckmäßigen Ausführungsform des Kraftstoffbehälters gemäß der Erfindung ist vorgesehen, dass nur in den die Tankaußenseiten bildenden Wandungsbereichen der Elemente Barriereschichten für Kohlenwasserstoffe vorgesehen sind.

Zweckmäßigerweise sind Mittel zur Belüftung des Hohlraums der als Hohlformteile ausgebildeten Elemente vorgesehen. Es kann beispielsweise vorgesehen sein, dass an geeigneter Stelle der Halbschalen jeweils Be- und Entlüftungsöffnungen vorgesehen sind, wobei es zweckmäßig ist, dass der Hohlraum der Elemente jeweils mit einem Filterelement kommuniziert. Bei Betrieb des KFZ kann beispielsweise eine aktive Spülung des betreffenden Hohlraums mit Luft vorgesehen sein.

Durchgänge, Unterteilungen und sonstige Konturen in der Behälterwandung können durch Verschweißung übereinanderliegend angeordneter Wandungsbereiche der Elemente ausgebildet sein, d. h. durch sogenannte Wand-zu-Wand-Verschweißung, wodurch gleichzeitig eine Stabilisierung des Kraftstoffbehälters erreicht werden kann. Durchgänge an Wand-zu-Wand-Verschweißungen in kalibrierter Qualität für die Durchführung von Leitungen und Anschlüssen sind möglich.

Wenigstens die die Behälterinnenwandung bildenden Bereiche wenigstens eines Elements, vorzugsweise des in Gebrauchslage die Tankoberseite bildenden Elements, können zur Aufnahme und/oder Festlegung von Leitungen und andere Einbauten profiliert ausgebildet sein, was ebenfalls durch sogenannte "Wand-zu-Wand-Verschweißungen" erzielbar ist.

Alternativ ist es ebenso einfach möglich, Einlegeteile zur Aufnahme von Leitungen oder Einbauten, wie beispielsweise eines Reservoirs vorzusehen, die mit der Behälterinnenwandung beim Blasvorgang eine innige Verbindung eingehen.

Ferner kann vorgesehen sein, dass übereinanderliegende Wandungsbereiche Leitungen und/oder Kanäle bildend miteinander verschweißt sind, so dass der Einbau separater Leitungen teilweise entbehrlich wird.

Schließlich kann noch vorgesehen sein, dass die Elemente bzw. Halbschalen so miteinander verschweißt sind, dass diese im Bereich der Schweißnaht zwischen sich wenigstens einen wenigstens teilweise umlaufenden Belüftungskanal bilden, der in ähnlicher Art und Weise belüftet sein kann wie der Freiraum zwischen den Wandungen der Elemente. Auf diese Art und Weise wird die Permeabilität des fertigen Kraftstoffbehälters für Kohlenwasserstoffe noch weiter herabgesetzt.

Die beiden Halbschalen des Kraftstoffbehälters können beispielsweise durch Heizelementschweißen miteinander verbunden sein. Andere Arten der Verbindung, beispielsweise auch Kleben, sind im Rahmen der Erfindung denkbar.

Die Erfindung wird nachstehend anhand eines in den Zeichnungen dargestellten Ausführungsbeispiels erläutert werden.

Es zeigen:
- Fig. 1: eine perspektivische Ansicht eines erfindungsgemäßen Kraftstoffbehälters,
- Fig. 2: einen Schnitt durch den Kraftstoffbehälter entlang der Linie II-II in Fig. 1,
- Fig. 3: eine Ansicht entlang der Linien III-III in Fig. 2,
- Fig. 4: eine ebensolche Ansicht einer alternativen Ausgestaltung der Behälterinnenwandung in diesem Bereich und
- Fig. 5: einen vergrößerten Ausschnitt der Außenwandung des Kraftstoffbehälters.

Der in den Figuren dargestellte Kraftstoffbehälter ist aus zwei im Extrusions-Blasverfahren hergestellten Halbschalen 2a, 2b zusammengesetzt, von denen die in Gebrauchslage obere Halbschale mit 2a und die in Gebrauchslage untere Halbschale mit 2b bezeichnet ist. Die beiden Halbschalen 2a und 2b sind an einer umlaufenden Naht 3 miteinander verschweißt, wobei die miteinander verschweißten Stirnflächen der Halbschalen 2a, 2b bei dem gewählten Ausführungsbeispiel aus Stabilitätsgründen jeweils einen umlaufenden Absatz 4a, 4b aufweisen, wobei der Absatz 4a der oberen Halbschale 2a innenliegend ausgebildet ist und der Absatz 4b der unteren Halbschale 2b außenliegend ausgebildet ist, so dass die obere Halbschale 2a und die untere Halbschale 2b sich gegeneinander zentrieren sowie die obere Halbschale 2a die obere Halbschale 2b formschlüssig umgreift.

Wie vorstehend bereits erwähnt, ist jede der Halbschalen als im Extrusions-Blasform-Verfahren hergestelltes Hohlformelement ausgebildet und wurde durch Ko-Extrusion eines mehrschichtigen schlauchförmigen Vorformlings erhalten. Die Ko-Extrusion solcher Laminate ist Stand der Technik, so dass hierauf im folgenden nicht mehr eingegangen wird. Aufgrund der Ausbildung der Halbschalen 2a, 2b als Blasformteile sind diese doppelwandig ausgebildet, wobei zwischen den Behälterwandungen 5, 6 bereichsweise ein Spalt 7 freigehalten ist. Mit 5 ist die Behälteraußenwandung bezeichnet, mit 6 die Behälterinnenwandung.

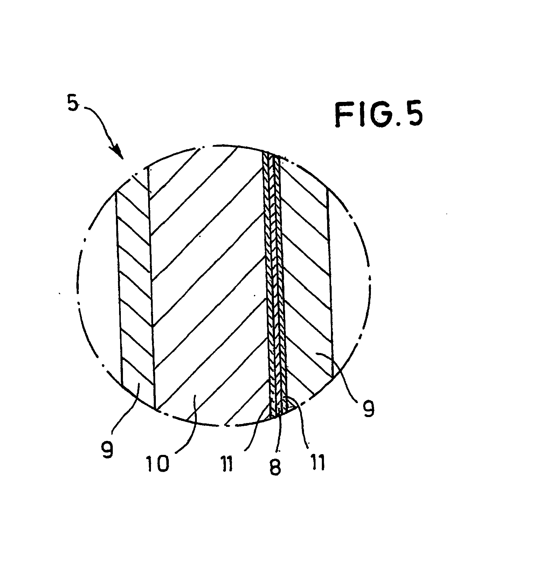

Bei dem dargestellten Ausführungsbeispiel besitzt nun die Behälteraußenwandung 5 eine Barriereschicht 8 für Kohlenwasserstoffe. Der Schichtaufbau, der die Barriereschicht 8 enthaltenen Behälteraußenwandung 5 ist aus Fig. 5 ersichtlich.

Die Behälteraußenwandung 5 hat den in Fig. 5 schematisch dargestellten Aufbau aus insgesamt sechs parallelen Schichten, von denen die beiden äußeren Schichten 9 beispielsweise aus Polyethylen bestehen. Mit 10 ist eine Schicht aus Regenerat bezeichnet. Unter Regenerat ist rückgeführtes Material zu verstehen, was beispielsweise bei der Herstellung der Halbschalen 2a, 2b oder bei der Herstellung anderer Blasformteile als Abfallmaterial (scrap) angefallen ist.

Die aus EVOH (Ethylen-Vinyl-Alkohol) bestehende Barriereschicht 8 ist beiderseits in eine Haftvermittlerschicht 11 eingebettet, mit der eine Verbindung mit dem Regenerat 10 oder mit der inwendig äußeren Schicht 9 aus Polyethylen gewährleistet ist.

Die Behälterinnenwandung 6 ist bei der dargestellten Ausführungsform des erfindungsgemäßen Kraftstoffbehälters 1 dreischichtig aufgebaut, wobei zwischen zwei äußeren Schichten aus Polyethylen eine Schicht aus Regenerat eingebettet ist.

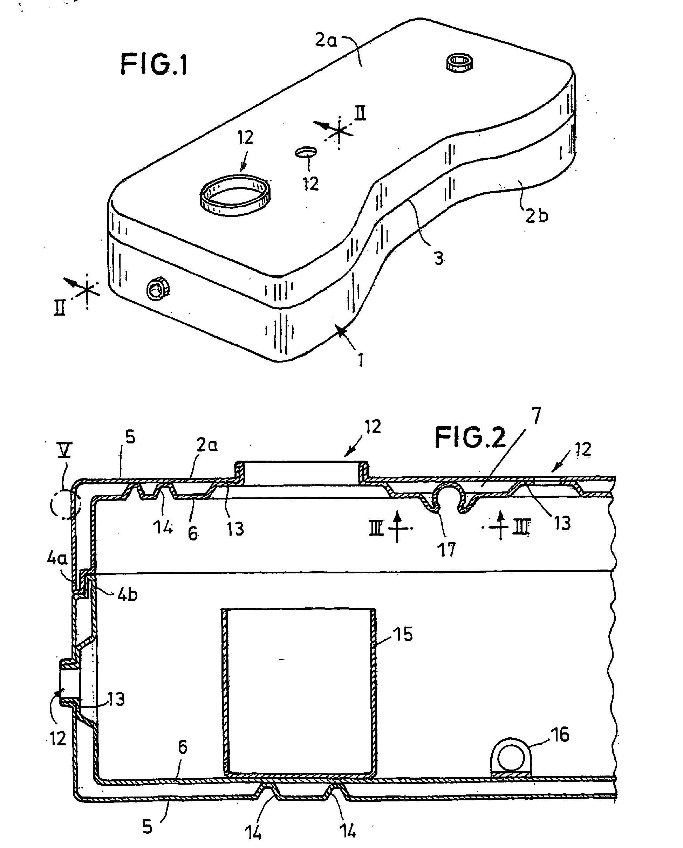

Bei dem in Fig. 2 schematisch dargestellten Schnitt durch den Kraftstoffbehälter sind in diesem nur zur Veranschaulichung diverse Öffnungen 12 eingezeichnet, die beispielsweise zur Aufnahme eines Gebers, eines Belüftungsventils oder eines Einfüllstutzens oder aber auch zur Aufnahme einer Fördereinheit vorgesehen sein können. Beispielsweise die oberseitig des Kraftstoffbehälters 1 vorgesehene große Öffnung könnte eine Fördereinheit, bestehend aus Schwalltopf und darin angeordneter Kraftstoffpumpe aufnehmen. Da Kraftstoffbehälter 1 und deren Einbauten heutzutage auf Lebensdauer ausgelegt sein müssen, ist es beispielsweise denkbar, die Öffnung für die Durchführung der Kraftstoffleitungen und elektrischen Leitungen, die an die Kraftstofffördereinheit angeschlossen werden, im Durchmesser kleiner zu wählen als dies sonst üblich ist, da es sich bei dem erfindungsgemäßen Kraftstoffbehälter 1 die Möglichkeit bietet, diese Einbauten vor Zusammenfügen der Halbschalen 2a, 2b in dem Kraftstoffbehälter 1 zu platzieren und zu sichern.

Die Öffnungen 12 in dem Kraftstoffbehälter 1 wurden durch "Wand-zu-Wand-Verschweißungen" 13 erhalten. In den mit 13 bezeichneten Bereichen hat das Formwerkzeug jeweils die Behälteraußenwandung 5 und Behälterinnenwandung 6 aufeinandergelegt und miteinander verschweißt, so dass in diesem Bereich nach Entformen der Halbschalen 2a, 2b aus dem jeweiligen Werkzeug durch entsprechende Nachbearbeitung kalibrierte Öffnungen 12 vorgesehen werden konnten.

Solche Wand-zu-Wand-Verschweißungen können selbstverständlich auch zu anderen Zwecken in den Halbschalen 2a, 2b vorgesehen sein, beispielsweise lediglich zur Verstärkung der Behälterwandungen 5, 6 in kritischen Bereichen oder um in der Behälterinnenwandung 6 Aufnahmen für Einbauten, Schläuche, Kabel oder dergleichen vorzusehen. Die Herstellung der den Kraftstoffbehälter 1 bildenden Halbschalen im Extrusions-Blasformverfahren hat den Vorzug, dass der Kraftstoffbehälter 1 nahezu jede beliebige Behälteraußenkontur als auch Behälterinnenkontur erhalten kann. Dem gegenüber hat die Herstellung des Kraftstoffbehälters 1 einstückig als Blasformteil den Nachteil, dass die Innenkontur des Behälters nur bedingt beeinflussbar ist.

Bei dem in Fig. 2 dargestellten Ausführungsbeispiel sind zur Versteifung der Behälterwandungen 5, 6 durch Wand-zu-Wand-Verschweißungen gebildete Verstärkungsrippen 14 vorgesehen, und zwar in der oberen Halbschale 2a in der Behälterinnenwandung 6 und in der unteren Halbschale 2b in der Behälteraußenwandung 5. Diese Verstärkungsrippen können längs, quer, diagonal oder in bestimmten Mustern auf den Behälterwandungen 5, 6 verlaufen. Nur schematisch ist in Fig. 2 ein mit 15 bezeichneter Schwalltopf oder auch Beruhigungstopf zur Aufnahme einer nicht dargestellten Fördereinheit gezeigt. Wie dies hinlänglich bekannt ist, bildet der Schwalltopf 15 ein Kraftstoffreservoir für eine Kraftstoffpumpe, welches bei Kurvenfahrten oder ähnlichen Beschleunigungszuständen des Kraftfahrzeugs die Kraftstoffversorgung der Kraftstoffpumpe sicherstellt. Dieser Schwalltopf 15 wird bei einstückig blasgeformten Kraftstofftanks entweder bei der Herstellung des Kraftstofftanks umblasen oder nachträglich durch eine entsprechende Öffnung in den Tank eingesetzt; in beiden Fällen ist es erforderlich, den Schwalltopf durch entsprechende Rastmittel an der Behälterinnenwandung festzulegen. Dies ist bei mehrteiliger Ausbildung des Kraftstoffbehälters 1 gemäß der Erfindung nicht erforderlich, dort kann der Schwalltopf 15 vor Zusammenfügen der Halbschalen 2a, 2b mit der Behälterinnenwandung 6 stoffschlüssig oder formschlüssig verbunden worden sein.

In Fig. 2 sind rein zufällig die Verstärkungsrippen 14 unter dem Schwalltopf 15 verlaufend eingezeichnet, es ist jedoch für den Fachmann selbstverständlich, dass die Abstützung eines Schwalltopfs und einer darin angeordneten Kraftstofffördereinrichtung nicht einer Verstärkung der Behälterwandung bedarf.

Mit 16 ist ein Halteteil bezeichnet, welches beispielsweise zur Aufnahme und Sicherung von in dem Kraftstoffbehälter 1 verlegten Leitungen vorgesehen ist. Dieses Halteteil 16 kann ebenso vor Zusammenfügen der Halbschalen 2a, 2b mit der Behälterinnenwandung 6 verschweißt, verklebt oder verrastet worden sein. Ein solches Halteteil 16 kann auch als Einlegeteil vorgesehen sein, welches beim Blasvorgang in die Blasform eingebracht wurde und bei der Aufweitung des Vorformlings in der Blasform mit letzterem eine innige Verbindung eingegangen ist.

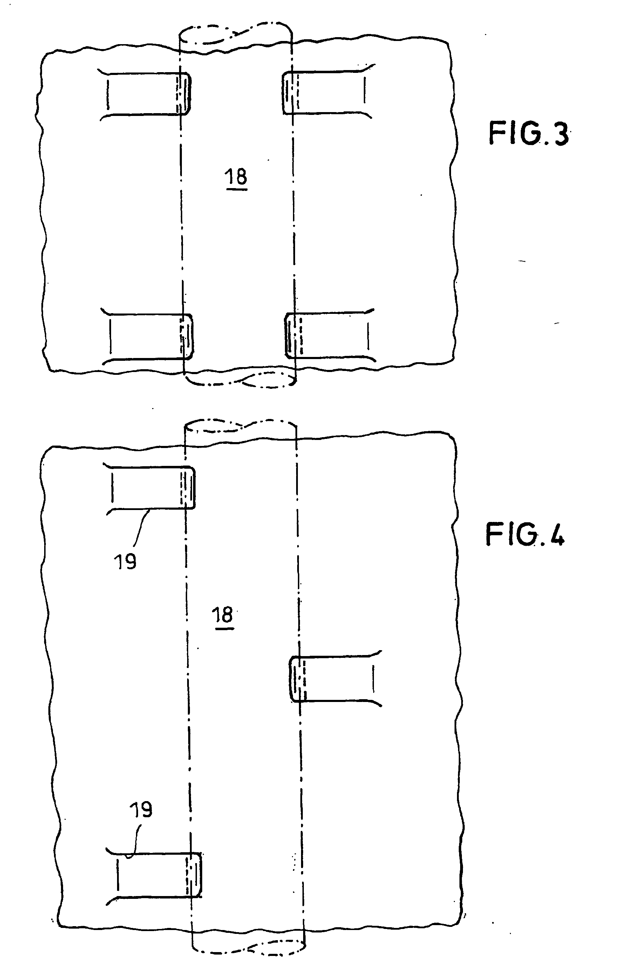

Wie vorstehend ganz allgemein schon erwähnt wurde, können in der Behälterinnenwandung auch Klipsaufnahmen 17 zur Fixierung von Kraftstoffleitungen 18 vorgesehen sein. Mögliche Varianten der Fixierung einer Kraftstoffleitung 18 sind in den Fig. 3 und 4 dargestellt. Die Klipsaufnahmen 17 werden jeweils durch elastische Haltezungen 19 gebildet, die jeweils paarweise stirnseitig gegenüberliegen (Fig. 3) oder gegenüberliegend versetzt zueinander (Fig. 4) angeordnet sein können. Diese werden durch entsprechende Formgebung des Blasformwerkzeugs in der Wandung des Blasformteils gebildet. Vor dem Zusammenfügen der Halbschalen 2a, 2b kann die Kraftstoffleitung im Falle der Ausführung gemäß Fig. 3 eingeklipst worden sein, im Falle der Ausführung gemäß Fig. 4 eingefädelt worden sein.

Der zwischen den Behälterwandungen 5, 6 freigehaltene Spalt kann einerseits als belüftbare Diffusionssperre für Kohlenwasserstoffe dienen, beispielsweise können hierfür Be-und Entlüftungsöffnungen vorgesehen sein, die mit einem Aktivkohlefilter kommunizieren, andererseits dient der Spalt 7 auch der Geräuschdämmung des sich in dem Kraftstoffbehälter bewegenden Kraftstoffs.

### Bezugzeichenliste

- 1: Kraftstoffbehälter
- 2a: obere Halbschale
- 2b: untere Halbschale
- 3: Naht
- 4a, b: Absätze
- 5: Behälteraußenwandung
- 6: Behälterinnenwandung
- 7: Spalt
- 8: Barriereschicht
- 9: äußere Schichten
- 10: Regenerat
- 11: Haftvermittler
- 12: Öffnungen
- 13: Wand-zu-Wand-Verschweißungen
- 14: Verstärkungsrippen
- 15: Schwalltopf
- 16: Einlegeteil
- 17: Klipsaufnahme
- 18: Kraftstoffleitung
- 19: Haltezungen

## Patentansprüche

1. Doppelwandiger Kraftstoffbehälter, insbesondere KFZ-Tank, aus Kunststoff, der aus wenigstens zwei miteinander stoffschlüssig verbundenen, schalenförmigen Elementen (2a, 2b) zusammengesetzt ist, **dadurch gekennzeichnet, dass** die schalenförmigen Elemente (2a, 2b) jeweils als doppelwandige Blasformteile ausgebildet sind, die jeweils zumindest bereichsweise mehrschichtig koextrudiert sind und zwischen deren Wandungen jeweils zumindest bereichsweise ein Spalt (7) freigehalten ist.

2. Kraftstoffbehälter nach Anspruch 1, **dadurch gekennzeichnet, dass** die doppelwandigen Elemente jeweils als Halbschalen (2a, 2b) ausgebildet sind, die miteinander verschweißt sind.

3. Kraftstoffbehälter nach einem der Ansprüche 1 oder 2, **dadurch gekennzeichnet, dass** die Wandungen der den Behälter bildenden Elemente jeweils zumindest bereichsweise aus einem Laminat mit wenigstens einer Barriereschicht (8) für Kohlenwasserstoffe ausgebildet sind.

4. Kraftstoffbehälter nach einem der Ansprüche 1 bis 3, **dadurch gekennzeichnet, dass** nur in den die Tankaußenseiten bildenden Wandungsbereichen der Elemente Barriereschichten (8) für Kohlenwasserstoffe vorgesehen sind.

5. Kraftstoffbehälter nach einem der Ansprüche 1 bis 4, **dadurch gekennzeichnet, dass** Mittel zur Belüftung des Hohlraums der als Hohlformteile ausgebildeten Elemente vorgesehen sind.

6. Kraftstoffbehälter nach Anspruch 5, **dadurch gekennzeichnet, dass** der Hohlraum der Elemente jeweils mit einem Filterelement kommuniziert.

7. Kraftstoffbehälter nach einem der Ansprüche 1 bis 6, **dadurch gekennzeichnet, dass** Durchgänge, Unterteilungen und Versteifungen in der Behälterwandung (5, 6) durch Verschweißung übereinanderliegend angeordneter Wandungsbereiche der Elemente ausgebildet sind.

8. Kraftstoffbehälter nach einem der Ansprüche 1 bis 7, **dadurch gekennzeichnet, dass** die Behälterinnenwandung (6) bildende Bereiche wenigstens eines Elements, vorzugsweise des in Gebrauchslage die Tankoberseite bildenden Elements zur Aufnahme und/oder Festlegung von Leitungen und anderer Einbauten profiliert sind.

## Claims

1. A double-wall fuel container, in particular a motor vehicle tank, of plastic material, which is composed of at least two elements (2a, 2b) in shell form which are joined together by joining of the materials thereof, **characterised in that** the elements (2a, 2b) in shell form are each in the form of double-wall blow mouldings which are each respectively coextruded in a multi-layer configuration at least in a region-wise manner, and a respective gap (7) is kept free between the respective walls thereof at least in a region-wise manner.

2. A fuel container according to claim 1 **characterised in that** the double-wall elements are each in the form of shell portions (2a, 2b) which are welded together.

3. A fuel container according to one of claims 1 and 2 **characterised in that** the walls of the elements forming the container are each at least in a region-wise manner of a laminate with at least one barrier layer (8) for hydrocarbons.

4. A fuel container according to one of claims 1 to 3 **characterised in that** barrier layers (8) for hydrocarbons are provided only in the wall regions of the elements, which form the outsides of the tank.

5. A fuel container according to one of claims 1 to 4 **characterised in that** there are means for venting the cavity of the elements which are in the form of hollow mouldings.

6. A fuel container according to claim 5 **characterised in that** the cavity of the elements respectively communicates with a filter element.

7. A fuel container according to one of claims 1 to 6 **characterised in that** passages, subdivision means and reinforcing means in the container wall (5, 6) are formed by welding wall regions of the elements, which wall regions are arranged in mutually superposed relationship.

8. A fuel container according to one of claims 1 to 7 **characterised in that** regions, which form the inside wall (6) of the container, of at least one element, preferably the element which in the position of use forms the top of the tank are profiled to receive and/or fix conduits and other fitments.

## Revendications

1. Réservoir de carburant à double paroi, en particulier réservoir destiné à des véhicules automobiles, en matière plastique, composé au moins de deux éléments en forme de coque (2a, 2b), reliés ensemble en complémentarité de matière, **caractérisé en ce que** les éléments en forme de coque (2a, 2b) sont réalisés à chaque fois en tant que pièces moulées par soufflage à double paroi, coextrudées respectivement, au moins par zone, en plusieurs couches et entre les parois desquelles est maintenu, dans chaque cas, au moins par zone, un espace (7).

2. Réservoir de carburant selon la revendication 1, **caractérisé en ce que** les éléments à double paroi sont réalisés à chaque fois en tant que demi-coques (2a, 2b), soudées ensemble.

3. Réservoir de carburant selon l'une quelconque des revendications 1 ou 2, **caractérisé en ce que** les parois des éléments formant le réservoir sont réalisées à chaque fois, au moins par zone, en un aggloméré laminé avec au moins une couche de barrage (8) pour des hydrocarbures.

4. Réservoir de carburant selon l'une quelconque des revendications 1 à 3, **caractérisé en ce que** ne sont prévues des couches de barrage (8) pour des hydrocarbures que dans les zones de paroi, formant les côtés extérieurs du réservoir, des éléments.

5. Réservoir de carburant selon l'une quelconque des revendications 1 à 4, **caractérisé en ce que** sont prévus des moyens pour aérer l'espace creux des éléments réalisés en tant que pièces moulées creuses.

6. Réservoir de carburant selon la revendication 5, **caractérisé en ce que** l'espace creux des éléments communique à chaque fois avec un élément filtre.

7. Réservoir de carburant selon l'une quelconque des revendications 1 à 6, **caractérisé en ce que** le soudage des zones de paroi, se superposant, des éléments permet de réaliser des passages, des divisons et des renforcements dans la paroi du réservoir (5, 6).

8. Réservoir de carburant selon l'une quelconque des revendications 1 à 7, **caractérisé en ce que** des zones, formant la paroi intérieure du réservoir (6), d'au moins un élément, de préférence de l'élément formant la partie supérieure du réservoir, en situation d'utilisation, sont profilées pour recevoir et/ou fixer des conduites et autres éléments de montage.
